# EUROPEAN PATENT SPECIFICATION

(11) **EP 2 607 104 B1**
(45) Date of publication and mention of the grant of the patent: **25.10.2017**
(21) Application number: 12189964.5
(22) Date of filing: 25.10.2012
(51) Int. Cl.: B60C 9/22, B60C 9/00, B60C 9/20

(54) **Pneumatic tire**
Luftreifen
Pneu

(30) Priority: 22.12.2011 JP 2011281840
(43) Date of publication of application: 26.06.2013
(73) Proprietor: SUMITOMO RUBBER INDUSTRIES LIMITED, Kobe-shi, Hyogo-ken (JP)
(72) Inventor: Isaka, Wataru, Kobe-shi, Hyogo-ken 651-0072 (JP)
(74) Representative: Manitz Finsterwald Patentanwälte PartmbB

(56) References cited:
- EP-A1- 0 558 037
- EP-A1- 1 852 277
- EP-A2- 1 213 159
- JP-A- H0 840 014

## Description

### Background of the Invention

The present invention relates to a pneumatic tire, more particularly to a combination of a tread reinforcing band and a tread groove capable of satisfy both of high speed stability and ride comfort at high levels. The features of the preamble of the independent claim are known from EP 1 213 159 A2. Related technologies are known from EP 0 558 037 A1 and JP H08 40014 A.

In the pneumatic tires for passenger cars, motorcycles and the like, in order to reinforce the tread portion, a tread reinforcing band, which is made of a reinforcing cord or cords spirally wound at an angle of not more than 5 degrees with respect to the tire circumferential direction, is widely employed as the radially outermost tread reinforcement, for example as disclosed in US Patent Application Publication No. US-2010-319825-A1.

Such a tread reinforcing band can decrease deformation of the tread portion during running, and contributes to an improvement of the high speed stability.

From the aspect of effective improvement in the high speed stability, it is preferred to use steel cords as the reinforcing cords in order to increase the rigidity of the tread portion. However, if steel cords are used, the flexibility of the tread portion is lessened in return, and there is a possibility that the disturbance absorbability is lost and ride comfort is deteriorated.

### Summary of the Invention

It is therefore, an object of the present invention to provide a pneumatic tire which satisfies both of high speed stability and ride comfort at high levels.

According to the present invention, a pneumatic tire comprises
a tread portion provided with a tread groove,
a pair of sidewall portions,
a pair of bead portions,
a carcass extending between the bead portions through the tread portion and sidewall portions, and
a tread reinforcing band disposed radially outside the carcass in the tread portion as the radially outermost reinforcing cord layer composed of a plurality of reinforcing cords laid at an angle of not more than 5 degrees with respect to the tire circumferential direction, wherein
each of the reinforcing cords is a steel cord composed of a plural number N of steel filaments twisted together into a 1xN open twist structure, and
the shortest distance between the bottom of the tread groove and the underlying reinforcing cords is in a range of from 0.5 to 2.0 mm.

Preferably, the steel filaments of the reinforcing cord have an outer diameter in a range of from 0.10 to 0.30 mm. The elongation percentage of the reinforcing cord at a tensile load of 50N is in a range of from 0.5 to 1.5 %. The plural number N is preferably five.

In this application including specification and claims, various dimensions, positions and the like of the tire refer to those under a normally inflated unloaded condition of the tire unless otherwise noted.

The normally inflated unloaded condition is such that the tire is mounted on a standard wheel rim and inflate to a standard pressure but loaded with no tire load.

The standard wheel rim is a wheel rim officially approved or recommended for the tire by standards organizations, i.e. JATMA (Japan and Asia), T&RA (North America), ETRTO (Europe), TRAA (Australia),STRO (Scandinavia), ALAPA (Latin America), ITTAC (India) and the like which are effective in the area where the tire is manufactured, sold or used. The standard pressure and the standard tire load are the maximum air pressure and the maximum tire load for the tire specified by the same organization in the Air-pressure/Maximum-load Table or similar list. For example, the standard wheel rim is the "standard rim" specified in JATMA, the "Measuring Rim" in ETRTO, the "Design Rim" in TRA or the like. The standard pressure is the "maximum air pressure" in JATMA, the "Inflation Pressure" in ETRTO, the maximum pressure given in the "Tire Load Limits at various cold Inflation Pressures" table in TRA or the like.

### Brief Description of the Drawings

Fig. 1 is a cross sectional view of a pneumatic tire as an embodiment of the present invention.
Fig. 2(a) is a partial perspective view of a strip of rubberized reinforcing cords to be spirally wound to form the tread reinforcing band.
Fig. 2(b) is a cross sectional view of a reinforcing cord composed of five steel filaments.
Fig. 3 is a graph showing load-elongation curves of the reinforcing cord shown in Fig. 2(b) and a stranded steel cord shown in Fig. 5.
Fig. 4(a) is an enlarged cross sectional view of a grooved part of the tread portion.
Fig. 4(b) is an enlarged cross sectional view of the same grooved part when the tread portion is bent.
Fig. 5 is a cross sectional view of a stranded steel cord having a 3x3 structure.

### Description of the Preferred Embodiments

Embodiments of the present invention will now be described in detail in conjunction with the accompanying drawings.

In the drawings, pneumatic tire 1 according to the present invention comprises a tread portion 2, a pair of axially spaced bead portions 4 each with a bead core 5 therein, a pair of sidewall portions 3 extending between the tread edges 2e and the bead portions 4, a carcass 6 extending between the bead portions through the tread portion and sidewall portions, a tread reinforcing belt 7 disposed radially outside the carcass 6 in the tread portion 2.

The tread portion 2 is provided in the outer surface 2s thereof with at least one tread groove 16. The tread groove 16 may be, for example, a circumferentially continuously extending groove, an axially extending groove, an oblique groove or the like. The tread groove 16 may have various configurations, for example, straight, curved, zigzag or the like.

The carcass 6 comprises at least one ply 6A of carcass cords extending between the bead portions 4 through the tread portion 2 and sidewall portions 3 and turned up around the bead core 5 in each bead portion 4 from the axially inside to the outside to form a pair of turned up portions 6b and a main portion 6a therebetween. The cords of the carcass ply 6A are arranged radially at an angle of 60 to 90 degrees with respect to the tire equator C and rubberized with topping rubber.

The bead portions 4 are each provided between the carcass turned up portion and main portion with a bead apex 8 made of hard rubber extending radially outwardly from the bead core 5.

The tread reinforcing belt 7 comprises a tread reinforcing band 10 as the radially outermost reinforcing cord layer and optionally a breaker (not shown) disposed between the tread reinforcing band 10 and the carcass 6.

The breaker comprises at least two cross plies of high modulus cords laid at an angle of from 10 to 35 degrees with respect to the tire equator C.

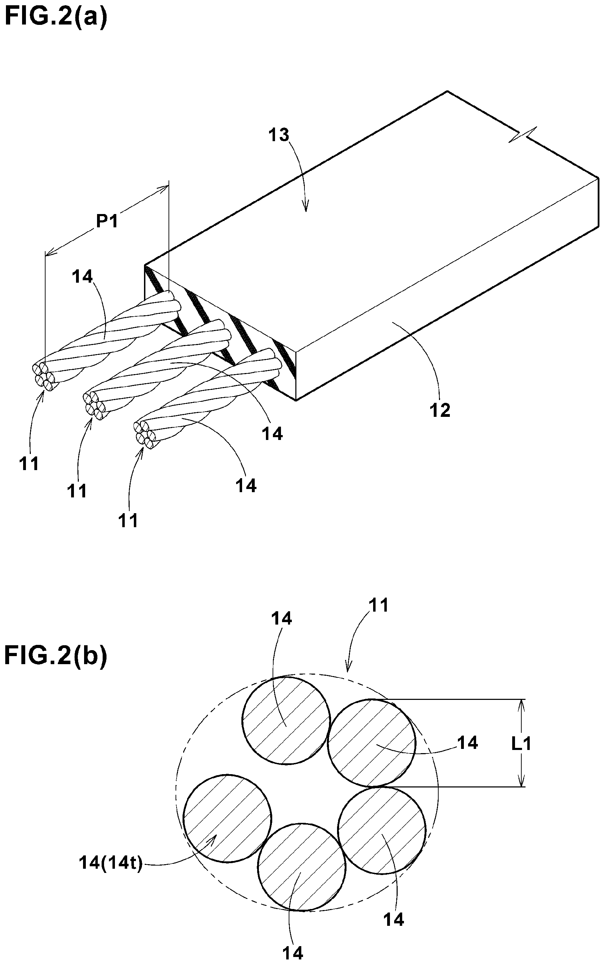

The tread reinforcing band 10 is composed of a plurality of reinforcing cords 11 laid at an angle of not more than 5 degrees with respect to the tire circumferential direction. The tread reinforcing band 10 is formed by spirally winding one or more strips 13 as shown in Fig. 2(a). The strip 13 is a single cord 11 or parallel cords 11 embedded in topping rubber 12 in a form of a narrow tape having a width fairly narrower than the width of the tread reinforcing band 10. Accordingly, the tread reinforcing band 10 is composed of one or more reinforcing cords 11 spirally wound a number of times to extend over almost entire width of the tread portion 2. The tread reinforcing band 10 can tighten the tread portion 2 and can improve the high speed stability. Since the tread reinforcing band 10 has no splice joint, tire uniformity can be improved.

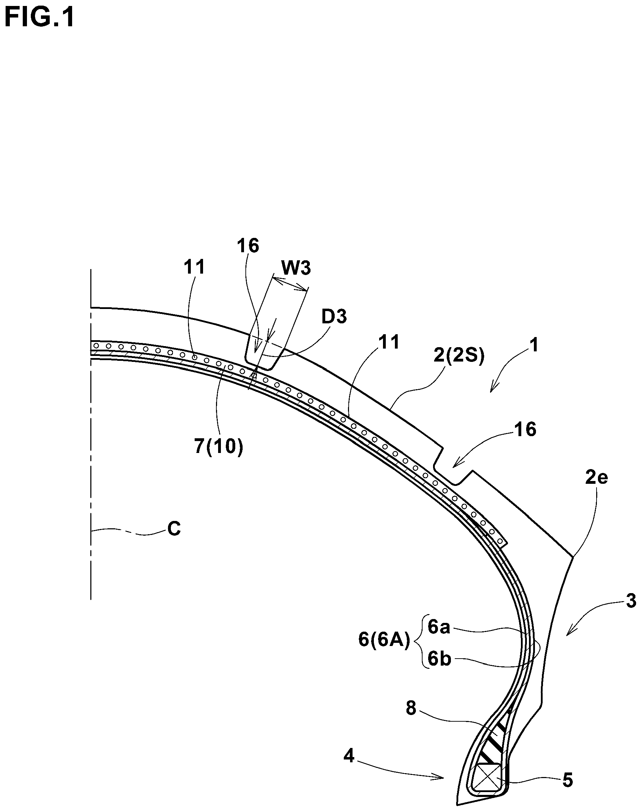

As shown in Fig. 1, the pneumatic tire 1 as an embodiment of the present invention is a motorcycle tire of which tread portion 2 (inclusive of the carcass, tread reinforcing belt and a tread rubber thereon) is curved with a relatively small radius of curvature when compared with the passenger car tires, truck/bus tires and the like, and as a result, the maximum cross section width of the tire lies between the tread edges 2e.

The tread portion 2 in this embodiment is provided with a plurality of tread grooves 16 which are oblique grooves arranged circumferentially of the tire.
In order to improve the wet performance, such tread grooves 16 preferably have a groove width W3 in a range of from about 3.0 mm to about 5.5 mm and a groove depth D3 in a range of from about 3.0 mm to about 4.5 mm.

The carcass 6 in this embodiment is composed of only the above-mentioned carcass ply 6A. As for the carcass cords, organic fiber cords, e.g. polyester, nylon, rayon, aramid or the like are suitably used.

The tread reinforcing belt 7 in this embodiment is composed of only the above-mentioned tread reinforcing band 10.

According to the present invention, the reinforcing cord 11 of the tread reinforcing band 10 is a steel cord made up of a plural number N of steel filaments 14 twisted together to have a 1xN open twist structure as shown in Figs. 2(a) and 2(b). (in the figures, N=5)
As to the material of the steel filaments, high carbon steel wires specified in JIS-G3506 are be preferably used.

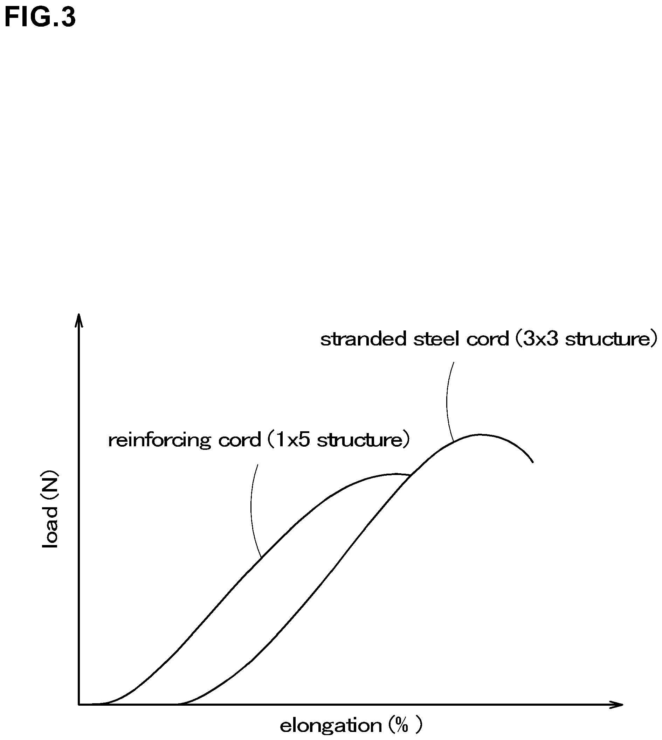

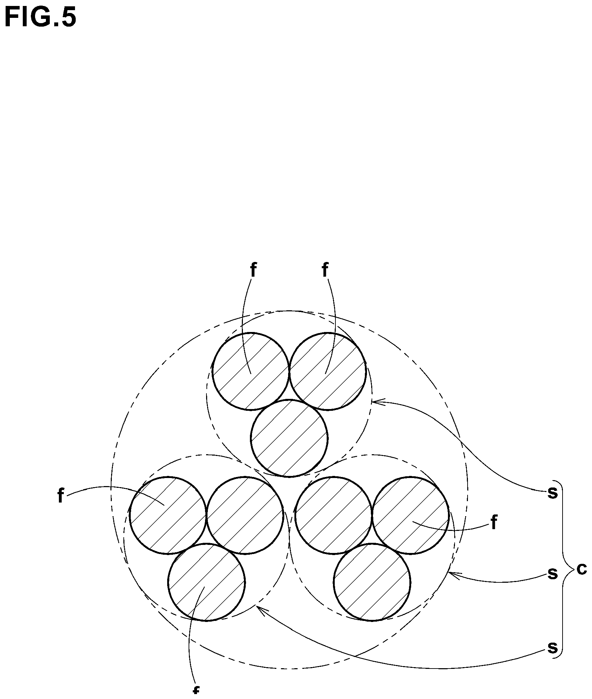

conventionally, a stranded steel cord (c) is employed in a tread reinforcing band. Such a stranded steel cord (c) is formed by twisting a plural number N of steel filaments (f) together into a strand (s) and then twisting a plural number M of strands (s) together into the cord (c). Thus, the cord (c) has a MxN twist structure as shown in Fig. 5 (in this figure, 3x3 twist structure).
In the case of such a stranded steel cord (c), as shown in Fig. 3, the rate of variation of elongation of the cord caused by a variation of load on the cord is very large in a low load range but small in a high load range, and such low load range is very narrow and wasted. Therefore, if the stranded steel cord (c) is used in the tread reinforcing band 10, since the load on the cord is high during high speed running and cornering and thereby the stiffness of the reinforcing band 10 is high, there is a problem such that the disturbance absorbability becomes insufficient and the ride comfort is deteriorated.

In contrast, in the reinforcing cord 11 used in this invention (for example, 1x5 structure), the above-mentioned rate of variation is relatively large from a low load to a high load. Therefore, the tread reinforcing band 10 allows a certain degree of deflection of the tread portion 2 during high speed running and cornering, in order words, the disturbance absorbability is improved, therefore, the ride comfort can be improved.

In order to effectively bring out such advantageous effect, the elongation percentage of the reinforcing cord 11 at a tensile load of 50N is preferably set in a range of not less than 0.5 %, more preferably not less than 0.7 %, but not more than 1.5 %, more preferably not more than 1.3 %. Further, the twist pitch length P1 of the reinforcing cords 11 is preferably set in a range of not more than 13 mm, more preferably not more than 11 mm, but not less than 5 mm, more preferably not less than 7 mm.
If the elongation percentage is more than 1.5 %, there is a possibility that the above-mentioned rate of variation becomes small in a high load range, and the disturbance absorbability can not be improved. If the elongation percentage is less than 0.5 %, the stretch of the tread reinforcing band during vulcanizing the tire becomes insufficient, and there is a possibility that defective moldings increase.

The number N of the steel filaments 14 is set in a range of not less than 2, preferably not less than 3, more preferably not less than 4, but not more than 9, preferably not more than 7, more preferably not more than 6.
If the number N is more than 9, the rigidity of the reinforce tread reinforcing band 10 is increased, and it becomes difficult to improve the ride comfort. If the number N is 1, it is difficult to improve the high speed stability.

The diameter L1 of the filaments 14 is set in a range of not more than 0.30 mm, preferably not more than 0.25 mm, but not less than 0.15 mm, preferably not less than 0.10 mm.

It is preferable that the filaments 14 of the reinforcing cord 11 include at least one spirally shaped filament 14t. The number of the shaped filament(s) 14t is at most three, most preferably one.

Owing to the shaped filament(s) 14t, the reinforcing cord 11 is provided between the twisted filaments 14 with gaps or openings, therefore, penetration of the topping rubber into the cord is improved. Further, during vulcanizing the tire, an appropriate stretch is allowed for the tread reinforcing band, and the occurrence of defective molding can be prevented, If the number of the shaped filaments 14t is more than three, it becomes difficult to improve the disturbance absorbability because the rate of variation of elongation of the cord caused by a variation of load on the cord becomes large in a low load range and small in a high load range like a stranded cord.

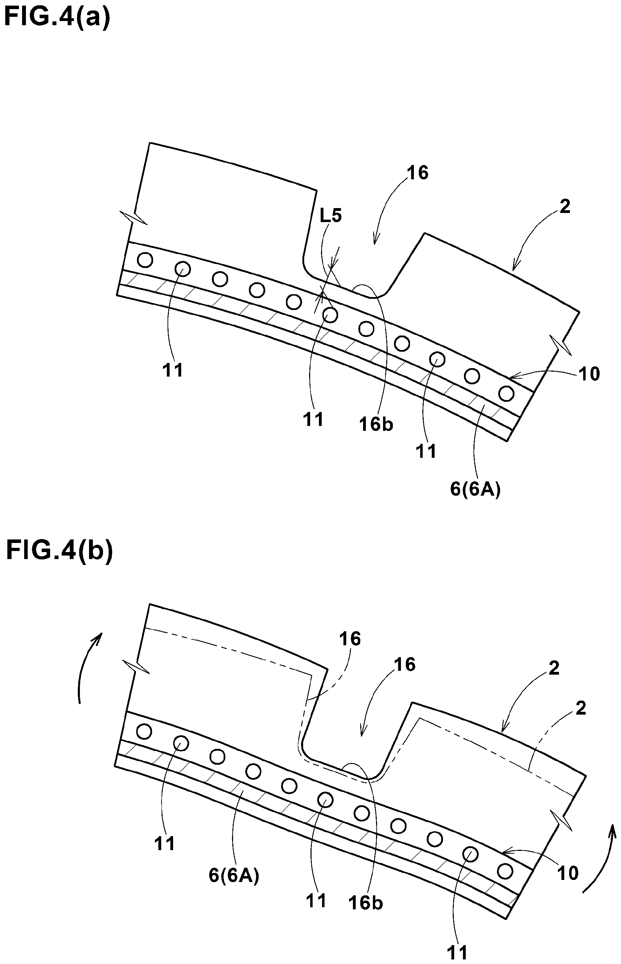

According to the present invention, as shown in Fig. 4(a), the shortest distance L5 between the bottom 16b of each tread groove 16 and the underlying reinforcing cords 11 is set in a range of not less than 0.5 mm, preferably not less than 0.8 mm, but not more than 2.0 mm, preferably not more than 1.7 mm to decrease the rubber volume between the groove bottom 16b and the underlying reinforcing cords 11. Therefore, the rigidity of the tread portion is decreased at the position of the groove bottom 16b, and the tread portion becomes easier to bend at the grooved positions so as to close the opening as shown in Fig. 4(b). As a result, the disturbance absorbability is increased and thereby ride comfort can be improved.
If the shortest distance L5 is more than 2.0 mm, it is difficult to decrease the bending rigidity of the tread portion 2, therefore the ride comfort can not be effectively improved. If the shortest distance L5 is less than 0.5 mm, the rigidity of the tread portion 2 becomes insufficient and it becomes difficult to improve the high speed stability.

### Comparison Tests

Based on the internal tire structure shown in Fig. 1, motorcycle tires of size 180/55ZR17 having the tread reinforcing bands composed of reinforcing cords having specifications shown in Table 1 were prepared and tested.

Common specifications are as follows.
groove width W3: 6.0 mm
groove depth D3: 6.5 mm
tread reinforcing band:
cord count: 38 ends/5cm
reinforcing cord:
twist pitch length P1: 10 mm
spiral pitch length of shaped filament: 5 mm

material of steel filaments

| | | |
|---|---|---|
| C: | 0.67 | to 0.75 wt% |
| Mn: | 0.40 | to 0.60 wt% |
| Si: | 0.35 | wt% or less |
| P: | 0.025 | wt% or less |
| S: | 0.025 | wt% or less |
| Cu: | 0.2 | wt% or less |
| Cr: | 0.2 | wt% or less |

### < Disturbance absorbability (ride comfort) test >

The test tire was mounted on a standard wheel rim (rim size: 17XMT5.50) and inflated to 250 kPa, and then the vertical spring constant of the tire was measured under a light tire load of 0.5 kN and a heavy tire load of 2.5 kN.

The results are indicated in Table 1 by an index based on Embodiment tire Ex.1 being 100, wherein the values in a range of from 95 to 105 are favorable.

### < High speed stability test >

The test tires were installed on a 750 cc street motorcycle (tire pressure: front=250 kPa, rear=290 kPa). On a dry asphalt road, at the time the motorcycle was entering a corner of 400 m radius at a speed of 250 km/h, the test rider evaluated the easiness to start to lean the motorcycle. Further, at the time the motorcycle was getting off the corner, the convergence of wobbling of the motorcycle (if occurred) was evaluated. Then, comprehensively the high speed stability was evaluated into five ranks, wherein rank 4 or higher is favorable.

The results are shown in Table 1.

**Table 1**

| Tire | Ref.1 | Ex.1 | Ex.2 | Ex.3 | Ex.4 | Ex.5 | Ex.6 |
|---|---|---|---|---|---|---|---|
| reinforcing cord | | | | | | | |
| twist structure | 3X3 | 1X5 | 1X3 | 1X6 | 1X5 | 1X5 | 1X5 |
| filament diameter L1(mm) | 0.2 | 0.2 | 0.2 | 0.2 | 0.1 | 0.3 | 0.4 |
| number of shaped filament | - | 1 | 1 | 1 | 1 | 1 | 1 |
| elongation percentage @ 50N (%) | 2.0 | 0.7 | 0.7 | 0.7 | 1.0 | 0.5 | 0.5 |
| shortest distance L5(mm) | 1.5 | 1.5 | 1.5 | 1.5 | 1.5 | 1.5 | 1.5 |
| disturbance absorbability | | | | | | | |
| @ 0.5 kN | 105 | 100 | 95 | 105 | 95 | 105 | 105 |
| @ 2.5 kN | 120 | 100 | 95 | 105 | 95 | 100 | 105 |
| high speed stability | 4.0 | 5.0 | 4.5 | 4.5 | 4.0 | 4.5 | 3.5 |
| | | | | | | | |

| Tire | Ref. 2 | Ex.7 | Ex.8 | Ref. 3 | Ex.9 | Ex.10 | Ex.11 |
|---|---|---|---|---|---|---|---|
| reinforcing cord | | | | | | | |
| twist structure | 1X5 | 1X5 | 1X5 | 1X5 | 1X5 | 1X5 | 1X5 |
| filament diameter L1(mm) | 0.2 | 0.2 | 0.2 | 0.2 | 0.2 | 0.2 | 0.2 |
| number of shaped filament | 1 | 1 | 1 | 1 | 1 | 0 | 2 |
| elongation percentage @ 50N (%) | 0.7 | 0.7 | 0.7 | 0.7 | 1.5 | 0.7 | 0.7 |
| shortest distance L5(mm) | 0.0 | 0.5 | 2.0 | 2.5 | 1.5 | 1.5 | 1.5 |
| disturbance absorbability | | | | | | | |
| @ 0.5 kN | 80 | 95 | 105 | 115 | 95 | 105 | 95 |
| @ 2.5 kN | 80 | 95 | 105 | 115 | 105 | 100 | 100 |
| high speed stability | 3.0 | 4.0 | 4.5 | 4.0 | 4.5 | 4.5 | 4.5 |

From the test results, it was confirmed that the embodiment tires according to the present invention satisfy both of high speed stability and ride comfort at high levels.

## Claims

1. A pneumatic tire (1) comprising
a tread portion (2) provided with a tread groove (16),
a pair of sidewall portions (3),
a pair of bead portions (4),
a carcass (6) extending between the bead portions (4) through the tread portion (2) and sidewall portions (3), and
a tread reinforcing band (10) disposed radially outside the carcass (6) in the tread portion (2) as the radially outermost reinforcing cord layer composed of a plurality of reinforcing cords (11) laid at an angle of not more than 5 degrees with respect to the tire circumferential direction, wherein
each of the reinforcing cords (11) is composed of a plural number N of steel filaments (14) twisted together into a 1xN open twist structure,
**characterized in that**
the shortest distance (L5) between the bottom of the tread groove (16) and the underlying reinforcing cords (11) is in a range of from 0.5 to 2.0 mm;
the elongation percentage of the reinforcing cord (11) at a cord load of 50N is in a range of from 0.5 to 1.5 %.

2. The pneumatic tire according to claim 1, wherein the steel filaments (14) have a diameter (L1) in a range of from 0.10 to 0.30 mm.

3. The pneumatic tire according to claim 1 or 2, wherein the plural number N is five.

## Patentansprüche

1. Luftreifen (1), umfassend
einen Laufflächenabschnitt (2), der mit einer Laufflächenrille (16) versehen ist,
ein Paar Seitenwandabschnitte (3),
ein Paar Wulstabschnitte (4),
eine Karkasse (6), die sich zwischen den Wulstabschnitten (4) durch den Laufflächenabschnitt (2) und die Seitenwandabschnitte (3) erstreckt, und
ein Laufflächenverstärkungsband (10), das radial außerhalb der Karkasse (6) in dem Laufflächenabschnitt (2) als die radial äußerste Verstärkungskordschicht angeordnet ist, die aus einer Mehrzahl von Verstärkungskorden (11) zusammengesetzt ist, die unter einem Winkel von nicht mehr als 5 Grad mit Bezug auf die Reifenumfangsrichtung gelegt sind, wobei
ein jeder der Verstärkungskorde (11) aus einer Mehrzahl N von Stahlfilamenten (14) zusammengesetzt ist, die zu einer offenen 1 x N Zwirnstruktur miteinander verzwirnt sind,
**dadurch gekennzeichnet, dass**
der kürzeste Abstand (L5) zwischen dem Grund der Laufflächenrille (16) und den darunterliegenden Verstärkungskorden (11) in einem Bereich von 0,5 bis 2,0 mm liegt, und
die prozentuale Längung des Verstärkungskords (11) bei einer Kordlast von 50 N in einem Bereich von 0,5 bis 1,5 % liegt.

2. Luftreifen nach Anspruch 1, wobei die Stahlfilamente (14) einen Durchmesser (L1) in einem Bereich von 0,10 bis 0,30 mm aufweisen.

3. Luftreifen nach Anspruch 1 oder 2, wobei die Mehrzahl N fünf beträgt.

## Revendications

1. Bandage pneumatique (1) comprenant
une portion formant bande de roulement (2) dotée d'une rainure de bande de roulement (16),
une paire de portions de parois latérales (3),
une paire de portions de talons (4),
une carcasse (6) qui s'étend entre les portions de talons (4) en traversant la portion formant bande de roulement (2) et les portions de parois latérales (3), et
une bande de renforcement de roulement (10) disposée radialement à l'extérieur de la carcasse (6) dans la portion formant bande de roulement (2) sous forme d'une couche de câblés de renforcement radialement tout à fait à l'extérieur composée d'une pluralité de câblés de renforcement (11) posés sous un angle qui ne dépasse pas 5° par rapport à la direction circonférentielle du pneumatique, dans lequel
chacun des câblés de renforcement (11) est composé d'un nombre N de filaments en acier (14) torsadés ensemble dans une structure torsadée ouverte du type 1 xN,
**caractérisé en ce que**
la distance la plus courte (L5) entre le fond de la rainure de bande de roulement (16) et les câblés de renforcement sous-jacents (11) est dans une plage de 0,5 à 2,0 mm ;
le pourcentage d'allongement du câblé de renforcement (11) sous une charge de câblé de 50 N est dans une plage de 0,5 à 1,5 %.

2. Bandage pneumatique selon la revendication 1, dans lequel les filaments en acier (14) ont un diamètre (L1) dans une plage de 0,10 à 0,30 mm.

3. Bandage pneumatique selon la revendication 1 ou 2, dans lequel le nombre N est égal à cinq.
